# EUROPEAN PATENT APPLICATION

(11) **EP 2 187 618 A1**
(43) Date of publication of application: **19.05.2010**
(21) Application number: 08791620.1
(22) Date of filing: 25.07.2008
(51) Int. Cl.: H04N 5/00, H04Q 9/00

(54) **REMOTE CONTROL DEVICE AND TELEVISION RECEIVER**

(30) Priority: 26.07.2007 JP 2007194520
(71) Applicant: Sharp Kabushiki Kaisha, Osaka-shi, Osaka 545-8522 (JP)
(72) Inventor: HIRATA, Kozue, chiba-ken 2730002 (JP); TANAKA, Takao, Utsunomiya-shi Tochigi-ken 3210951 (JP); YAMAGUCHI, Yasuteru, Utsunomiya-shi Tochigi-ken 3200056 (JP)
(74) Representative: Müller - Hoffmann & Partner
(86) International application number: PCT/JP2008/063376
(87) International publication number: WO 2009/014206

(57) **Abstract**

To provide a remote controller into which a kitchen timer function and a television control function are integrated so that mutual cooperation between cooking and television watching is simplified. As shown in FIG. 5, when executing a kitchen timer function using a remote controller 50, a user depresses a function selection button 71 predetermined number of times to select the kitchen timer function. Next, the user depresses a first time period setting button 72 to set a "minute" unit portion of the desirable time period and then depresses a second time period setting button 73 to set a "second" unit portion of the time period. Finally, the user depresses a SET/STOP button 74 and the kitchen timer function starts. When the timer counts down and its display indicates "0 minute and 0 second", a buzzer 58 of a remote control section 56 gives an alarm sound. Further, the remote control section 56 switches the display of a liquid crystal display section 54 to a clock time display.

## Description

### Technical Field

The present invention relates to a remote controller and a television broadcast receiver and, more particularly, to a remote controller having a timer function and a television broadcast receiver capable of being operated by the remote controller.

### Background Art

In recent years, a television broadcast receiver (hereinafter, referred to as TV) has been used for personal purpose and is installed not only in a living room but also in other spaces in the house. A flat-screen TV such as a liquid crystal display TV is less restricted in terms of the installation location as compared to a tube TV, and a portable type flat-screen TV with a built-in battery has been prevalent and is installed in various locations. For example, in the case of a kitchen which has a large restriction in terms of the installation location of the TV, the liquid crystal TV can easily be installed by, e.g., being fitted to the wall surface of the kitchen. In this manner, the choice of the installation location can be broadened.

Under such circumstances, there may be a situation where one enjoys cooking while watching a TV cooking program. As a technique for supporting such a lifestyle, there has been proposed a technique that records a program that a user is watching on a TV installed in a living room in another TV installed in the kitchen through a predetermined operation (refer to Patent Document 1). With this technique, the user can enjoy cooking while watching the recorded program on the TV installed in the kitchen. Further, there is known a technique that provides a timer control for an electric apparatus by transmitting, through operation of a predetermined operation button on a remote controller, time information set in the remote controller to the electric apparatus having a general timer function (refer to Patent Document 2).

In today's society where everyone is busy, easy to prepare retort-packed food has become very popular and, recently, we can enjoy a delicious retort food by managing heating time or thawing time.

Here, assumed is a case where a retort food is cooked in, e.g., a microwave oven and a user starts watching a TV after setting the heating time. In this situation, there may be a case where the user is so preoccupied with a TV program that he or she misses an alarm sound indicating the end of the heating time. Further, even in the case where a user enjoys cooking while checking a cooking program on a TV installed in the kitchen as described above, he or she needs to manage the heating time or thawing time of the microwave oven depending on the food type. Also in this situation, there may be a case where the user is unaware that the heating time or thawing time has passed due to daily life noise such as loud TV sound and noise of dishwashing with running water. Thus, the user confirms the end of the cooking time by using a kitchen timer, etc.
Patent Document 1: JP-A-2007-129309
Patent Document 2: JP-A-2002-139588

### Disclosure of the Invention

### Problems to be Solved by the Invention

In the case of safe cooking such as heating/thawing with a microwave oven, there may be a case where a user gets away from the kitchen to watch a TV in a living room and thereby misses an alarm sound of a kitchen timer. Even in the case where a user moves to a living room for answering a phone or to an entrance for seeing a visitor, if he or she carries the kitchen timer, the above disadvantage can be avoided; however, he or she may leave the timer in the kitchen.
Further, even in the case where a TV is installed in the kitchen, there may be a case where a user is so preoccupied with a TV program that he or she misses the ending sound of the kitchen timer. Further, the technique disclosed in Patent Document 2 is a technique that inputs and stores time information such as time data associated with a so-called clock function on the electric apparatus side in the remote controller by operating the remote controller body and transmits the time information for turning on/off the operation of the electric apparatus from the remote controller so as to allow the electric apparatus to perform a predetermined operation associated with the clock function of the electric apparatus.

The present invention has been made in view of the above situation, and an object of the present invention is to provide a technique capable of allowing a user to effectively recognize the elapse of a timer time period set for a function other than a TV function even in the case where he or she watches a TV during cooking by using only the remote controller or by cooperation between the function of the remote controller or a function that the TV inherently has.

### Means for Solving the Problems

An apparatus disclosed in the present invention is a remote controller. The remote controller of the present invention includes: a TV operation function section that operates a TV broadcast receiver; a timer function section that can make a timer operate independently of the operation performed for the TV broadcast receiver; and a notification section that makes notification of progress of the timer in the timer function section.
The notification section may include a display section that displays the timer's progress.
The timer function section may be capable of executing a plurality of timers.
The TV operation function section may output a signal for operating the TV broadcast receiver when the timer function is activated and counts up a preset time period.
The TV operation function section may be capable of operating a TV broadcast receiver different from a TV broadcast receiver as a primary operation target of the remote controller in conjunction with the timer operation.
At the time when the timer function starts, the TV operation function section may notify the TV operation function section of a set timer time period and the start of the timer function.
The remote controller may include an external device operation function section that operates an external device different from any of the TV broadcast receivers in conjunction with the timer operation.
At the time when the timer function starts, the TV operation function section may notify the TV broadcast receiver of a set timer time period and the start of the timer function.
The timer function section may make notification of the timer' s progress at a predetermined timing.
The remote controller may include a fixing means for fixing the remote controller to a predetermined location.
A TV operation means for operating the TV operation function section and a timer operation means for operating the timer function section may be disposed apart from each other with the display section interposed therebetween.
The remote controller may include a plurality of remote control signal communication sections which are provided at different positions; and a control means for acquiring, from the TV broadcast receiver, information concerning one of remote control signal communication sections communication between which and the TV broadcast receiver has established after transmitting remote control signals to the TV broadcast receiver from the plurality of remote control signal communication sections and disabling the communication function of the remote control signal communication sections communication between which and the TV broadcast receiver has not been established.
The remote controller may include a plurality of remote control signal communication sections which are arranged maintaining the relative positional relationships with the display section, TV operation means, and timer operation means, respectively.
The remote controller may include a control means for acquiring, from the TV broadcast receiver, information concerning one of remote control signal communication sections communication between which and the TV broadcast receiver has established after transmitting remote control signals to the TV broadcast receiver from the plurality of remote control signal communication sections and disabling the communication function of the remote control signal communication sections communication between which and the TV broadcast receiver has not been established.
Another apparatus disclosed in the present invention is a TV broadcast receiver. The TV broadcast receiver can be operated from a remote controller and includes: a timer operation acquisition section that acquires, from the remote controller, information concerning the operation state of a timer that does not aim at reservation operation of the TV broadcast receiver and is allowed to progress independently by the remote controller; and a timer operation section that performs operation associated with the acquired information concerning the operation state of the timer function.
The TV broadcast receiver may include a power supply control section that turns on/off the power of the TV broadcast receiver when the timer operation acquisition section receives information indicating that the timer function has started.
The timer operation section may display the progress of the timer on a display screen when the timer operation acquisition section receives notification of the start of the timer function and a time period set by the timer function.
The timer operation section may display on a display screen information indicating that the preset time has been counted up at the count-up time of the preset time period.
The TV broadcast receiver may include a housing portion that houses the remote controller in such a manner so as to be able to receive an operation signal from the remote controller.
Still another apparatus disclosed in the present invention is a remote controller. The remote controller includes: a TV operation function section that operates a TV broadcast receiver; a timer function section; and a notification section that makes notification of the progress of a timer in the timer function section.
Still another apparatus disclosed in the present invention is a TV broadcast receiver. The TV broadcast receiver includes: a timer operation acquisition section that acquires from a remote controller having a timer function information concerning the operation state of the timer function; and a timer operation section that performs operation associated with the acquired information concerning the operation state of the timer function section.

### Advantages of the Invention

According to the present invention, it is possible to for a user to effectively recognize the elapse of a time period set by a timer for an object other than TV function even in the case where he or she is watching a TV while cooking.

### Brief Description of the Drawings

FIG. 1 is a view schematically showing the outer shape of a TV receiver according to a first embodiment in a state where a remote controller having a timer function is housed in the TV receiver.
FIG. 2 is a view schematically showing the outer shape of the TV receiver according to the first embodiment in a state where the remote controller has been removed from the TV receiver.
FIG. 3 is a functional block diagram of the TV receiver according to the first embodiment.
FIG. 4 (a) is a plan view schematically showing the outer shape of the remote controller according to the first embodiment.
FIG. 4 (b) is a bottom view schematically showing the outer shape of the remote controller according to the first embodiment.
FIG. 4 (c) is a front view schematically showing the outer shape of the remote controller according to the first embodiment.
FIG. 4 (d) is a plan view schematically showing the outer shape of the remote controller according to the first embodiment at the time when a timer operation has been set.
FIG. 5 is a functional block diagram of the remote controller according to the first embodiment.
FIG. 6 (a) is a view showing a display screen of the TV receiver according to the first embodiment while a kitchen timer is activated.
FIG. 6 (b) is a view showing a display screen of the TV receiver according to the first embodiment in a state where the kitchen timer has counted up the preset time.
FIG. 7 is a flowchart showing timer operation processing performed in the TV receiver according to the first embodiment after the TV receiver has received a timer operation instruction from the remote controller.
FIG. 8 is a flowchart showing operation of the TV receiver according to the first embodiment at the count-up time.
FIG. 9 is a functional block diagram of a TV receiver according to a second embodiment.
FIG. 10 is a functional block diagram of a remote controller according to the second embodiment.
FIG. 11 (a) is a view showing a first example of a screen displayed on the display section when the timer operation is canceled or changed by the TV receiver according to the second embodiment.
FIG. 11 (b) is a view showing a second example of a screen displayed on the display section when the timer operation is canceled or changed by the TV receiver according to the second embodiment.
FIG. 12 is a flowchart showing processing of changing a notification mode using a function of the human body detection sensor of the TV receiver in the case where the user is not located near the TV receiver at the count-up time according to the second embodiment; and
FIG. 13 is a functional block diagram of a recorder according to a third embodiment.

### Explanation of Reference Symbols

10, 110, 211: TV receiver
11: Liquid crystal panel
12: Stand
14: Remote controller housing portion
16: Reception section
17: Transmission section
18: Antenna
19: Operation section
20: Main control section
22: Demodulation circuit
24: External input section
26: Selector
28: Signal processing section
32: Output section
34: Display section
36: Speaker
38: Power supply control section
40: Power supply circuit
42: Memory
43: Timer section
44: Remote control state display control section
45: Timer information retention section
46: Human body detection sensor
47: External remote control processing section
50: Remote controller
51: Reception section
51a: First reception section
51b: Second reception section
51c: Third reception section
52: Transmission section
52a: First transmission section
52b: Second transmission section
52c: Third transmission section
53: Housing state detection switch
54: Liquid crystal display section
54a: Clock time display section
54b: Selected function display section
55: Magnet
56: Remote control section
57: Timer information retention section
59: Timer section
60: TV control key section
61: Power button
62: Channel-up button
63: Channel-down button
64: Volume-up button
65: Volume-down button
70: Time/light-up key section
71: Function selection button
72: First time period setting button
73: Second time period setting button
74: SET/STOP button
75: Lighting button
80: External device operation section
210: Recorder

### Best Mode for Carrying Out the Invention

Preferred embodiments for practicing the present invention (hereinafter, referred to merely as "embodiments") will concretely be described below with reference to the accompanying drawings. In general, a remote controller (hereinafter, referred to merely as "remote controller") for TV is known as a multi-remote controller capable of only controlling TV operation and/or its peripheral electric apparatus. As to a kitchen timer, there only exist a stand-alone timer or a timer added as one of the functions of a cooking appliances or refrigerator. In the present invention, a kitchen timer function and a television control function are integrated into a remote controller so that mutual cooperation between cooking and television watching is simplified. In other words, as disclosed in Patent Documents 1 and 2, in a conventional remote controller, a timer function is executed so as to make a target apparatus such as TV to be in a user's desired operation state. That is, the timer function realizes a user's desired operation such as power-on/power-off, channel change, and the like. On the other hand, a timer function in the embodiments of the present invention does not carry out, in place of a user, the operation for making a target apparatus such as TV to be in a desired operation state but prompts the user to perform, according to the value of the timer, an action that he or she keeps in mind. In the following, basic features proposed in the present embodiments will be described in a first embodiment, and extended features of the technique of the first embodiment will be described in second to fourth embodiments.

### <First Embodiment>

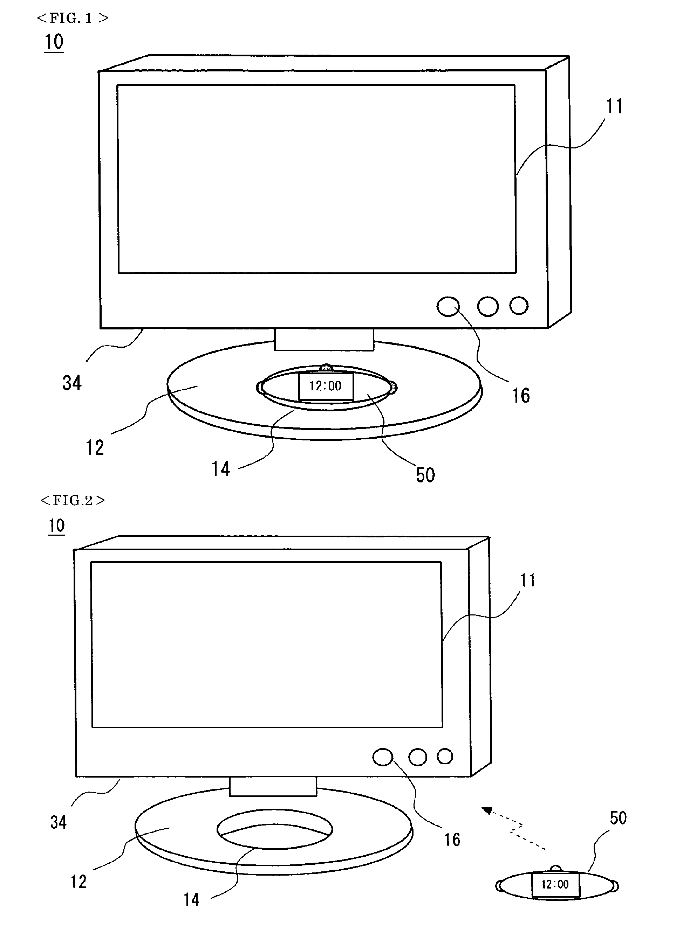

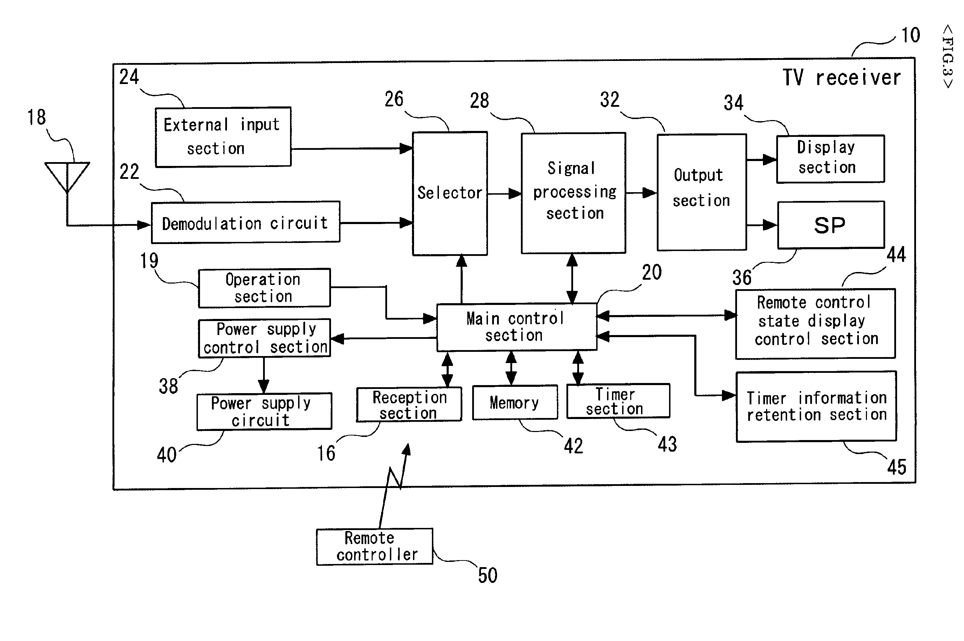

FIG. 1 is a view schematically showing the outer shape of a TV receiver 10 in a state where a substantially elliptical shaped remote controller 50 having a timer function is housed in the TV receiver 10. FIG. 2 is a view schematically showing the outer shape of the TV receiver 10 in a state where the remote controller 50 has been removed from the TV receiver 10. FIG. 3 is a functional block diagram of the TV receiver 10.

The outer shape of the TV receiver 10 will first be described with reference to FIGS. 1 and 2. The TV receiver 10 includes a display section 34 having a liquid crystal panel 11 and a stand 12 for maintaining the TV receiver 10 in a predetermined posture. The stand 12 has a remote controller housing portion 14 in which the remote controller 50 can be housed. The remote controller housing portion 14 has a concaved elliptical shape corresponding to the shape of the remote controller 50.

The display section 34 has a reception section 16 at the lower-right portion, in the drawing, of the outer frame of the TV receiver 10. Thus, even in a state shown in FIG. 1 where the remote controller 50 is housed in the remote controller housing portion 14, the reception section 16 receives an operation signal from the remote controller 50 properly. Naturally, even in a state shown in FIG. 2 where the remote controller 50 has been removed from the remote controller housing portion 14, the reception section 16 receives the signal from the remote controller 50 properly as long as a distance between the reception section 16 and remote controller 50 falls within a predetermined range. A communication method between the TV receiver 10 and remote controller 50 may be wireless communication using infrared ray or other electric wave. Although the wired communication may be adopted as the communication method between the TV receiver 10 and remote controller 50 according to the need, it is assumed in the following description that they communicate with each other by using infrared ray.

Next, the internal configuration of the TV receiver 10 will be described with reference to a functional diagram of FIG. 3. The TV receiver 10 includes a main control section 20 that performs overall control for respective functional sections of the TV receiver 10, a memory 42 that functions as a working table or storage area, and an operation section 19 that receives an operational instruction from a user.

Further, the TV receiver 10 includes a demodulation circuit (tuner) 22 that receives a broadcast wave including a digital or analog signal and demodulates it, an external input section 24 to which an external device such as a DVD player is connected, a selector 26 that selects the demodulation circuit 22 or external input section 24 as an input source, a signal processing section 28 that decodes a demodulated signal or adjusts image data or voice data to a desired setting, an output section 32 that converts, for output, a received signal into a signal to be output to a display section 34 or speaker 36, a display section 34 such as a liquid crystal panel 11, a speaker 36, and a timer section 43 that controls clock time display and elapsed time. In addition, the TV receiver 10 includes a remote control state display controller 44 that displays a counting state of a timer function set by the remote controller 50, and a timer information retention section 45 that stores a timer operation setting acquired from the remote controller 50.

The output section 32 generates image data to be displayed on the display section 34 such as a liquid crystal panel 11 or cathode-ray tube or voice data to be output from the speaker 36. The reception section 16, which is constituted by, e.g., a circuit including a photodiode, converts a signal output from the remote controller 50 into an electric signal so as to notify the main control section 20 of the converted signal. The main control section 20 executes operation associated with the notification.

The TV receiver 10 further includes a power supply circuit 40 that is connected to a commercial AC source of 100 V 50/60 Hz and converts a received current into a controlled current of a predetermined voltage and a power supply control section 38 that controls the power supply circuit 40.

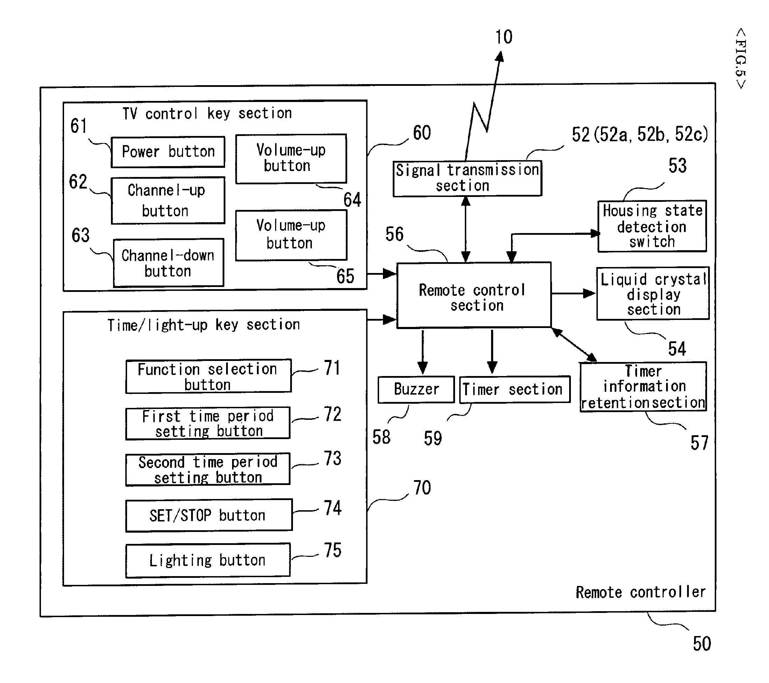

Each of the respective functional sections such as the main control section 20, signal processing section 28, and output section 32 and a later-described remote control section 56 (refer to FIG. 5) of the remote controller 50 is implemented as an LSI (Large Scale Integration) such as a CPU (Central Processing Unit) or a memory, and the function thereof is realized by execution of a program stored in the memory.

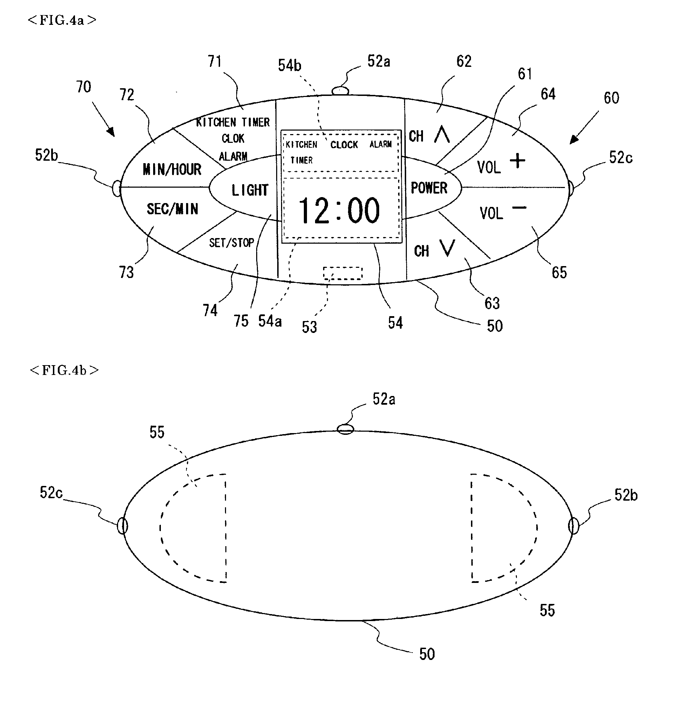

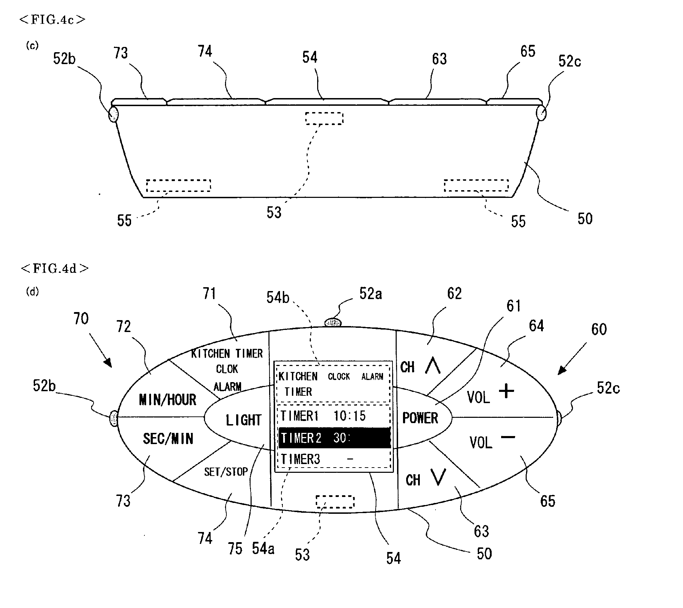

Next, the remote controller 50 will be described. FIGS. 4(a) to 4(d) are views schematically showing the outer shape of the remote controller 50. FIG. 4 (a) is a plan view of the remote controller 50, FIG. 4 (b) is a bottom view thereof, FIG. 4 (c) is a front view thereof, and FIG. 4 (d) is a plan view thereof at the time when a timer operation has been set. FIG. 5 is a functional block diagram of the remote controller 50.

The remote controller 50 has a horizontally long elliptical shape as viewed from above as shown in FIG. 4 (a) and has a boat shape as viewed from side as shown in FIG. 4 (c). The remote controller 50 has, at the upper apex portion (upper side end portion of the short axis), left apex portion (left end portion of the long axis), and right apex portion (right end portion of the long axis), a first transmission section 52a, a second transmission section 52b, and a third transmission section 52c that transmit a remote control signal to positions corresponding to the above apex portions. The first to third transmission sections 52a to 52c are, e.g., LEDs (Light Emitting Diodes) and are collectively referred to merely as "transmission section 52" according to circumstances.

The outer shape of the remote controller 50 is roughly divided into three parts in a vertical direction: a center part, a right part, and a left part. The center part has a liquid crystal display section 54, right part has a TV control key section 60, and left part has a clock/light-up key section 70. The TV control key section 60 and clock/light-up key section 70 are separated from each other with the liquid crystal display section 54 interposed therebetween as shown in the drawing, so that enhanced operability of operation buttons can be achieved.

The liquid crystal display section 54 includes a clock time display section 54a that displays clock time and elapsed time during the counting operation of the timer and a selected function display section 54b that indicates a currently selected function. In FIG. 4(a), a word "CLOCK" indicating a clock function is displayed in the center of the selected function display section 54b. When a kitchen timer function is selected, a word "KITCHEN TIMER" is displayed on the left side of "CLOCK". When a TV timer function is selected, a word "ALARM" is displayed on the right side of "CLOCK".

The TV control key section 60 has volume control buttons for volume up/down of the TV receiver 10 and channel change buttons for sequential channel up/down operation. More specifically, the TV control key section 60 has a power button ("POWER") 61 in the center (left side center portion) of its semicircular shape. Further, the TV control key section 60 has a channel-up button 62 ("CH ^"), a volume-up button ("VOL +") 64, a volume-down button 65 ("VOL -"), and a channel-down button ("CH v") 63 which are arranged semi-annually around the power button 61 from the top to bottom in the order mentioned. In FIG. 4 (a), the channel-up button 62 and channel-down button 63 are symmetrically arranged in the vertical direction and, similarly, the volume-up button 64 and volume-down button 65 are symmetrically arranged in the vertical direction.

Every time a user presses the power button 61, a signal for turning on or off the TV receiver 10 is output from the first to third transmission sections 52a to 52c to the TV receiver 10. Similarly, as to the channel-up button 62, channel-down button 63, volume-up button 64, and volume-down button 65, a signal associated with each button depressed by the user is output from the transmission section 52 to the TV receiver 10.

The clock/light-up key section 70 has buttons which are arranged in a horizontally symmetric manner to those provided in the TV control key section 60. More specifically, the clock/light-up key section 70 has a lighting button ("LIGHT") 75 in the center portion.
Further, the clock/light-up key section 70 has a function selection button ("KITCHEN TIMER/CLOCK/ALARM") 71, a first time period setting button ("MIN/HOUR") 72, a second time period setting button ("SEC/MIN") 73, and a SET/STOP button 74 which are arranged semi-annually around the lighting button 75 from the top to bottom in the order mentioned.

The lighting button 75 turns on a built-in light (not shown) to illuminate the buttons arranged in the control key section 60 or clock/light-up key section 70 and turns on a backlight of the liquid crystal display section 45 to enhance the user's visibility of the liquid crystal display section 54 when being depressed by a user.

The function selection button 71 sequentially selects the functions of the kitchen timer, clock, and alarm according to user's depression operation. The selected function is displayed on the selected function display section 54b of the liquid crystal display section 54.

The first time period setting button 72 and the second time period setting button 73 set clock time or timer time period according to user's depression operation.

The SET/STOP button 74 is depressed by a user when he or she starts or stops setting the clock time. In the case of the clock time display, a display as shown in the remote controller 50 of FIG. 4 (a) is made. On the other hand, during counting of the timer, a display as shown in the remote controller 50 of FIG. 4 (d) is made.

As shown in FIG. 4 (b), magnets 55 are incorporated in the vicinity of the left and right end portions of the bottom portion of the remote controller 50 and function as a fixing means. With the magnets 55, it is possible to easily attach the remote controller 50 to the door of a refrigerator or a storage rack installed in the kitchen, thereby enhancing operability. The fixing means is not limited to the magnets 55. For example, an adhesive disk may be used as the fixing means. Further, a housing state detection switch 53 is provided about the lower side of the upper surface of the remote controller 50. The housing state detection switch 53 is, for example, a proximity switch and detects a state where the remote controller 50 is housed in the remote controller housing portion 14. In a state where the remote controller 50 is housed in the remote controller housing portion 14 of the stand 12, the remote control section 56 uses only the third transmission section 52c which is located in the position nearest to the reception section 16 of the TV receiver 10 to output an operation signal to the TV receiver 10. That is, in the operation environment of the remote controller 50 having a plurality of remote control signal transmission sections (52a, 52b, and 52c), the remote control signal is output from any one of the transmission sections while the remote control signal is not output from the other two transmission sections. This suppresses useless output of the operation signal, thereby saving a battery incorporated in the remote controller 50.

As shown in FIG. 5, the remote controller 50 includes a remote control section 56 that performs operation associated with the buttons of the TV control key section 60 and clock/light-up key section 70 or performs display control for the liquid crystal display section 54, a timer 59 constituted by a transmitting circuit such as an IC for realizing the clock and timer functions, a buzzer 58 that outputs an alarm sound, and a timer information retention section 57 that stores setting information concerning a timer operation set by a user. The timer information retention section 57 may store a plurality of timer operations.

The remote control section 56 uses the transmission section 52 to output, according to the need, a command associated with the user operation to the TV receiver 10. That is, when a user performs any operation for the TV control key section 60, a command is output as a predetermined signal from the transmission section 52 to the TV receiver 10 so as to make the TV receiver 10 perform operation associated with a button operated by the user. If the kitchen timer function is on, a command for instructing the display of the count-down or, when the timer counts up the preset time period, a command for turning off the TV receiver 10 is output from the transmission section 52 as a predetermined signal. The operation of the TV receiver 10 at the time when the time is counted up is not limited to turning-off but may be change of voice or change of the display screen. Operation examples of the TV receiver 10 and remote controller 50 at the time when the time is counted up will be described later.

Next, the functions of the above kitchen timer, clock, and alarm will be described. When the function selection button 71 is depressed by a user, a selected function is displayed in a blinking manner on the selected function display section 54b for a predetermined time period. Then, the user depresses the first time period setting button 72 or second time period setting button 73 during the blinking to set a desired time period. After completion of the setting of the time period, the user depresses the SET/STOP button 74, and the time count for the selected function starts.

First, the clock function will be described. When the kitchen timer function or alarm function is not being selected, the remote controller 50 is activating the clock function, and the liquid crystal display section 54 displays the clock time. When the display of the clock time needs to be corrected, the user depresses the function selection button 71 to select "CLOCK" to cause it to blink. Then, the user depresses the first time period setting button 72 to change a "hour" portion of the clock time and then depresses the second time period setting button 73 to change a "minute" portion of the clock time. After completion of the change, the user depresses the SET/STOP button 74 to thereby set the changed clock time.

Next, the alarm function will be described. The alarm function realizes power-on/off of the TV receiver 10 by means of the remote controller 50. When a set clock time has come, a signal for power-on/off of the TV receiver 10 is transmitted from the transmission section 52. When the TV receiver 10 is in a power-on state, the TV receiver 10 is tuned off upon reception of the signal; on the other hand, when the TV receiver 10 is in a power-off state, the TV receiver 10 is tuned on upon reception of the signal.

The user depresses the function selection button 71 to cause "ALARM" to blink. Subsequently, the user depresses the first time period setting button 72 to change a "hour" portion of the clock time and then depresses the second time period setting button 73 to change a "second" portion of the clock time. After completion of the change, the user depresses the SET/STOP button 74. Although the power-on and power-off are selected in a toggle manner in the timer operation of the present embodiment, the power-on and power-off may be set independently.

Next, the kitchen timer function will be described. When executing the kitchen timer function, the user depresses the function selection button 71 predetermined number of times to display "KITCHEN TIMER" in a blinking manner on the selected function display section 54b, whereby the kitchen timer function has been selected. The setting thus made is stored in the timer information retention section 57. The kitchen timer function can be set by minutes, and the maximum setting time is, e.g., 60 minutes. The alarm sound automatically stops after a certain time has elapsed from its start. Here, a case where three timer operations can be set as the kitchen timer function will be described. For example, as shown in FIG. 4 (d), "KITCHEN TIMER" is displayed in a blinking manner on the selected function display section 54b. At the same time, on the clock time display section 54a, "TIMER 1", "TIMER 2", "TIMER 3" and their setting time or timer operation state are displayed from the top to the bottom in this order. In the example of FIG. 4 (d), "TIMER 1" is in a count-down state, and the remaining time is "10 minutes and 15 seconds". "TIMER 2" is highlighted, which indicates that it is being set by a user. "TIMER 3" is in a state where the time operation has not been set, which is indicated by "-".

Then, the user depresses the first time period setting button 72 to set a "minute" unit portion of the desirable time period and then depresses the second time period setting button 73 to set a "second" unit portion of the time period. In the example of FIG. 4 (d), "30" has been set to the "minute" unit portion in "TIMER 2", and no setting has been made for the "second" unit portion therein.

Finally, the user depresses the SET/STOP button 74 and the kitchen timer function starts. For example, in the case where "30 minutes and 0 second" has been set, a state where the set time period is counted down from "30 minutes and 0 second" minute by minute is displayed in the liquid crystal display section 54. When the timer counts up the preset time period and its display indicates "0 minute and 0 second", the buzzer 58 of the remote control section 56 gives an alarm sound. Further, the remote control section 56 switches the display of the liquid crystal display section 54 to a clock time display. The alarm sound stops when the user depresses the SET/STOP button 74.

Upon start of the kitchen timer function, the remote control section 56 of the remote controller 50 outputs information concerning the set time period to the TV receiver 10 from the transmission section 52. If the TV receiver 10 is in a power-off state, the user may turn on the TV receiver 10. Upon receiving the information indicating the start of the kitchen timer function, the TV receiver 10 counts down the time period set by the remote controller 50. The remote control state display control section 44 displays the count-down in an OSD (On Screen Display) manner on the display section 34. When the set time period is counted up (remaining time 0), the remote control state display control section 44 instructs, through the main control section 20, the display section 34 and speaker 36 to display information or the like indicating that the set time period has been counted up and to give an alarm sound, respectively.

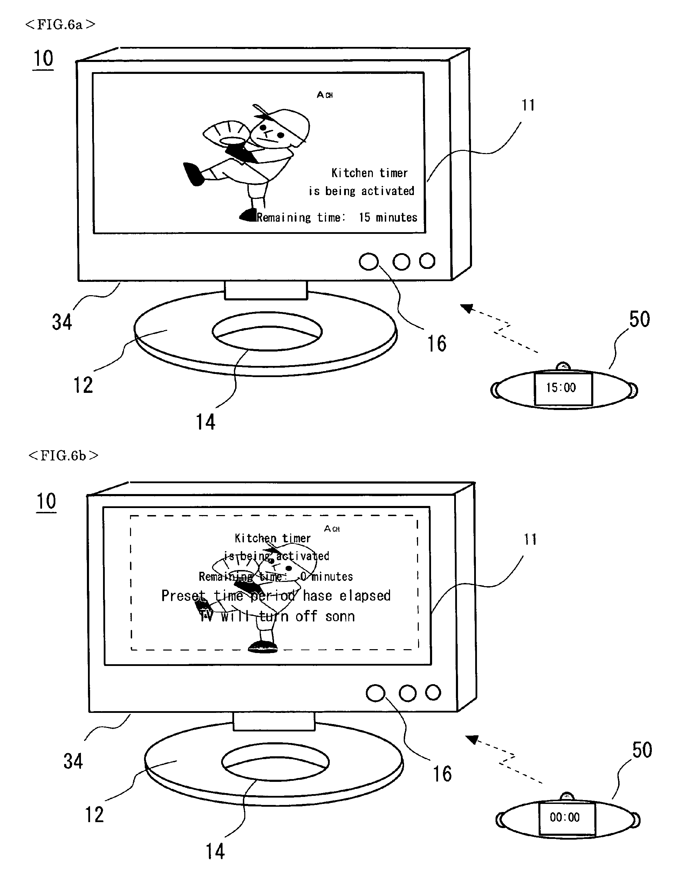

FIGS. 6 (a) and 6 (b) show an example of a state of the TV receiver 10 while the kitchen time function is activated. In FIG. 6(a), information indicating that the kitchen timer is activated and that the remaining time is 15 minutes is displayed at the lower-right portion of the display screen. FIG. 6 (b) shows the TV receiver 10 in a state where the set timer time period has been counted up. When the timer counts up the preset time period, a notification to the user is displayed in the center of the screen. In this example, information indicating that the TV receiver 10 is turned off is displayed.
Although only one timer operation has been set in the example shown in FIGS. 6 (a) and 6 (b), when a plurality of timer operations have been set, the progress and count-up information of the respective timer operations are displayed in a distinguishable manner.

A use example of the timer function will briefly be described. Here, cooking by stewing is taken as an example.
1) Ingredients are prepared before cooking
2) 30 minutes is set as stewing time by remote controller 50
3) Ingredients are thrown into pan, and turn on gas stove
4) Kitchen timer is set by remote controller 50 upon turning-on of gas stove
5) Remote controller 50 transmits TV power-on signal to TV receiver 10 in conjunction with completion of setting for Kitchen timer
6) Progress of timer is displayed on display section 54 of remote controller 50, and timer's progress is also displayed also on display section 34 of the TV receiver 10 in OSD manner
7) Remote controller 50 outputs an alarm sound from buzzer 58 upon completion of count-down after 30 minutes has elapsed and, in conjunction with this, transmits signal for turning off TV receiver 10 to TV receiver 10
   Thus, the user can grasp the timer elapsed time reliably, allowing he or she to enjoy TV in the stewing time without worrying about failure of the cooking.

By imparting the kitchen timer function to the remote controller 50 as described above, it is possible for the user to casually enjoy TV watching during cooking. Further, cooperation between the kitchen timer and TV receiver 10 allows the user to effectively use a brief break in the cooking time for TV watching.

Although, in the count-down display in the TV receiver 10, the elapsed time is specified by using the timer section 43 provided in the TV receiver 10, but the method for specifying the elapsed time is not limited to this. For example, the remote controller 50 may notify the TV receiver 10 of the elapsed time of the timer 59 at predetermined intervals, e.g., every one minute. That is, numerical information is notified to the TV receiver 10 from the remote controller 50. Upon receiving the notification, the remote control state display control section 44 of the TV receiver 10 displays the time corresponding to the numerical information on the display section 34. The display on the display section 34 is performed in an OSD manner.

In the case where such a configuration is adopted, if the TV receiver 10 has been installed in a location other than the kitchen, the count-down display in the timer operation is enabled, allowing the user to reliably monitor the cooking time regardless of location.
This avoids a situation where the user misses the timer alarm sound going off in the kitchen due to viewing of the TV receiver 10.

A use of the plurality of transmission sections 52 (52a, 52b, 52c) allows reliable cooperation between the remote controller 50 and TV receiver 10 irrespective of whether the remote controller 50 is placed on a table or attached to a refrigerator by means pf the magnets 55 (i.e., irrespective of the location of the remote controller 50). By means of the magnets 55, the user can place the remote controller 50 having the timer function by his or her side.

Another example of operation of the TV receiver 10 that performs the timer operation in cooperation with the remote controller 50 will be described. In this example, operation of the TV receiver 10 differs depending on whether the TV receiver 10 that performs the timer operation in cooperation with the remote controller 50 is in a power-on or power-off state.

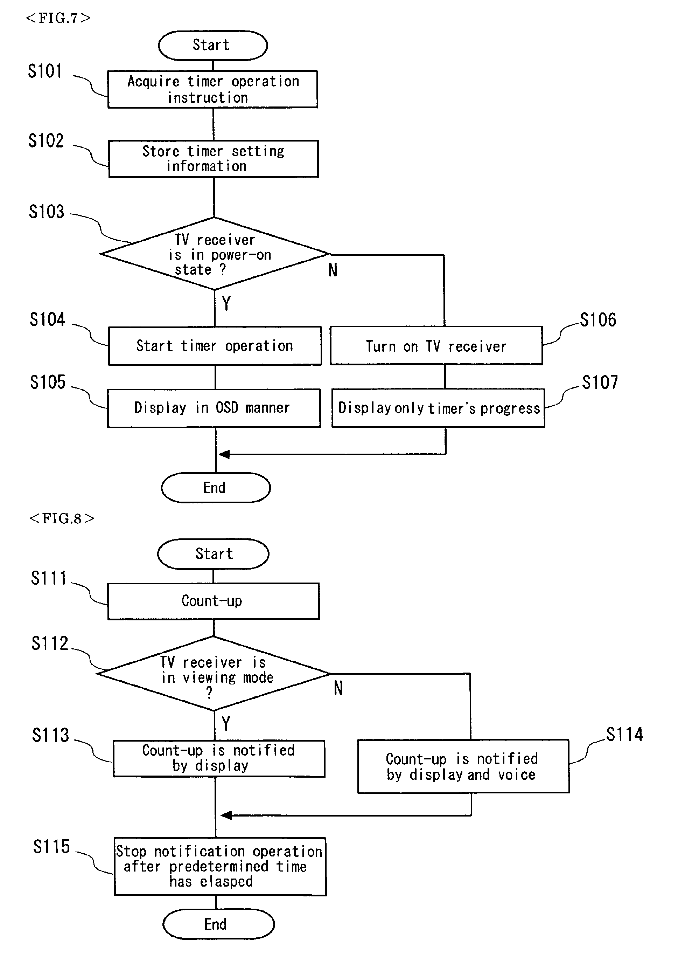

FIG. 7 is a flowchart showing operation of the TV receiver 10 after the TV receiver 10 has received a timer operation instruction from the remote controller 50. When the reception section 16 of the TV receiver 10 acquires setting information (e.g., timer number and timer time period) concerning the timer operation from the remote controller 50 (S101), the main control section 20 stores the setting information in the timer information retention section 45 (S102).
Subsequently, the main control section 20 determines whether the TV receiver 10 is in a power-on state and stores the determination result in association with the setting information (S103). In the case where the TV receiver 10 is in a power-on state (Y in S103), the main control section 20 makes the timer section 43 start its timer operation (S104), and the remote control state display control section 44 displays the time corresponding to the timer's progress, i.e., count-down on the display section 34 in an OSD manner (S105). At this time, in order to make clear distinction between the clock time displayed on the display section 34 and OSD displayed timer's progress, the timer's progress may be displayed using a different color from that of the clock time, displayed in a blinking manner, or displayed in combination with information indicating that the timer is being activated.

In the case where the TV receiver 10 is in a power-off state (N in S103), the main control section 20 controls the power supply control section 38 to turn on the power supply circuit 40 (S106) to thereby start displaying the count-down (S107). At this time, the tuner, i.e., the demodulation circuit 22 is made to remain in an off state. Further, at this time, display control is performed for only an area where the timer's progress (count-down) is displayed. For example, in the case where the display section 34 is a liquid crystal panel, the main control section 20 turns on the backlight corresponding to only an area required for displaying the time's progress.

Next, processing at the count-up time will be described. FIG. 8 is a flowchart showing operation of the TV receiver 10 at the count-up time. When the progress of the timer section 43 reaches the time stored in the timer information retention section 45, i.e., the timer counts up the preset time period (S111), the main control section 20 determines whether the TV receiver 10 is in a viewing mode (S112). For example, in the case where the demodulation circuit 22 is in an on state or where the external input section 24 receives any signal, the TV receiver 10 is determined to be in a viewing mode. In the case where the TV receiver 10 is in a viewing mode (Y in S112), the main control section 20 controls the remote control state display control section 44 to display on the display section 34 information indicating that the timer has counted up the preset time period (S113). In this case, it is determined that a user is likely to be watching some sort of content, so that, in order not to impede display or voice of the content, an alarm sound is not generated but only a screen display notification is made.

In the case where the TV receiver 10 is not in a viewing mode (N in S112), the main control section 20 controls the remote control state display control section 44 to display on the display section 34 information indicating that the timer has counted up the preset time period and outputs a voice for notifying the user of the above information (S114). Note that, at the count-up time, notification operation is performed in the remote controller 50. What type of notification operation is performed can be set by the user. Naturally, in the case where the TV receiver 10 is not in a viewing mode, the count-up notification may be made only by a voice. After the notification operation in S113 or S114 continues for a predetermined time period (e.g., 10 seconds), the main control section 20 ends the notification operation (S115). Then, the main control section 20 performs processing according to a predetermined setting (e.g., turns off the TV receiver 10).

By setting the notification operation of the TV receiver 10 at the count-up time depending on the power-on/off state of the TV receiver 10 at the timer operation start time as described above, the notification operation at the count-up time can be performed more effectively. In the case where the remote controller 50 is housed in the remote controller housing portion 14, the housing state detection switch 53 detects the housing state of the remote controller 50 as described above. At this time, the remote control section 56 may skip the notification at the count-up time from the remote controller 50 and perform it only from the TV receiver 10, thereby reducing battery consumption involved in the notification output from the remote controller 50.

The operations and effects of the present embodiment will be summarized below.
In a conventional remote controller, a timer function is executed so as to make a target apparatus such as a TV receiver to be in a user' s desired operation state. That is, the timer function acts as a user to perform a user's desired operation such as power-on/power-off, channel change, and the like. More specifically, functions such as a so-called reservation function for a broadcasting program and reservation function on an electronic program guide which are associated with a clock function of the TV and on-timer function or off-timer function working with the clock function work with clock data included in a broadcasting signal or clock function associated with the clock function. On the other hand, a timer function proposed in the present embodiment does not carry out, in place of a user, the operation for allowing a target apparatus such as the TV receiver 10 to perform operation working with the clock function but prompts the user to perform, according to the value of the timer, an action of the user himself/herself that he or she keeps in mind. That is, the timer function can be executed in an independent manner on the remote controller 50. Even when the TV receiver 10 and its timer function are made to work with each other, time information that is not at all associated with the clock function for executing the operation of the TV receiver 10 can be handled in cooperation with a remote control data communication function and a remote control data display function that the TV receiver 10 has. Such a technical concept has not been disclosed in any prior arts including Patent Documents 1 and 2.

### <Second Embodiment>

In the above first embodiment, the timer control is performed by one-way communication from the remote controller 50 to TV receiver 10. In the present embodiment, communication from a TV receiver 110 to remote controller 150 is made enable, whereby a change of the timer operation can be made from the TV receiver 10. Further, the TV receiver 110 according to the present embodiment is assumed to be not a primary operation target of a remote controller 150 and installed in a living room. On the other hand, the TV receiver (TV receiver 10 of the first embodiment) which is a primary operation target is assumed to be installed in the kitchen.

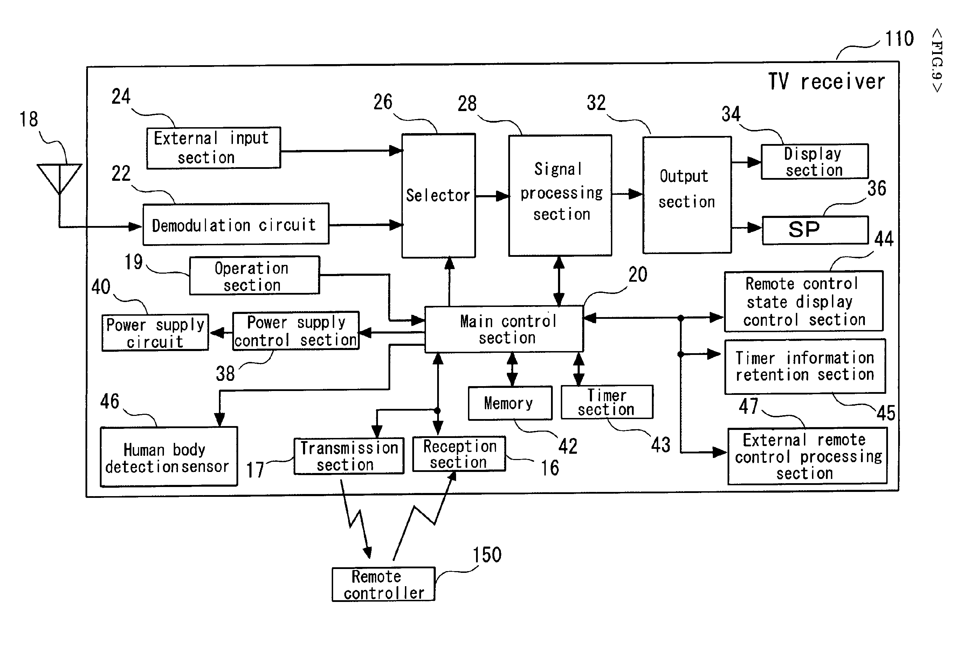

FIG. 9 is a functional block diagram showing a schematic configuration of a TV receiver 110 according to the present embodiment.

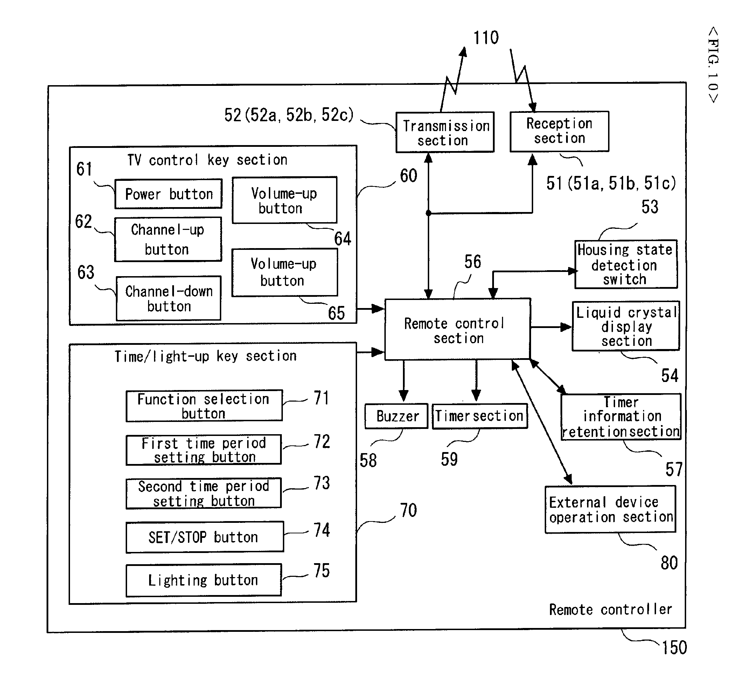

FIG. 10 is a functional block diagram showing a schematic configuration of a remote controller 150 according to the present embodiment. FIGS. 9 and 10 each show substantially the same configuration/function as that shown in the first embodiment, so that the same reference numerals are assigned to the same components, and only different portions will be described.

The TV receiver 110 includes a transmission section 17 that transmits a signal to the remote controller 150 and an external remote control processing section 47 that communicates with the remote controller 150 so as to realize the timer operation.

In order to receive an operation instruction from the remote controller 150 that doses not set the TV receiver 110 as a primary operation target, the external remote control processing section 47 has a registration function for enabling the TV receiver 110 to be operated by the remote controller 150. Further, the external remote control processing section 47 has a function of canceling or changing the timer operation set by the registered remote controller 150.

The TV receiver 110 further includes a human body detection sensor 46 that detects presence/absence of a person such as the user near the TV receiver 110. According to the detection result of the human body detection sensor 46, power-saving is made or notification operation at the count-up time of the timer operation is changed.

The remote controller 150 includes an external device operation section 80 that registers the TV receiver 110 as an operation target and a reception section 51 that receives a signal from the TV receiver 110. The reception section 51 is constituted by first to third reception sections 51a to 51c arranged at positions corresponding to the first to third transmission sections 52a to 52c. The transmission section 17 of the TV receiver 110 outputs a signal of a given form such as an infrared ray or a radio wave, and the reception section 51 of the remote controller 150 receives it. With this configuration, bi-directional communication is achieved between the TV receiver 110 and remote controller 150. In general, the registration processing between devices of the same manufacturer can often be omitted due to use of a signal form of the same remote control code. However, in the case where the remote controller is associated with a specific device for cooperative operation, it is preferable to restrict a communication party by using authentication information of both the devices, whereby effective control of the timer operation can be achieved.

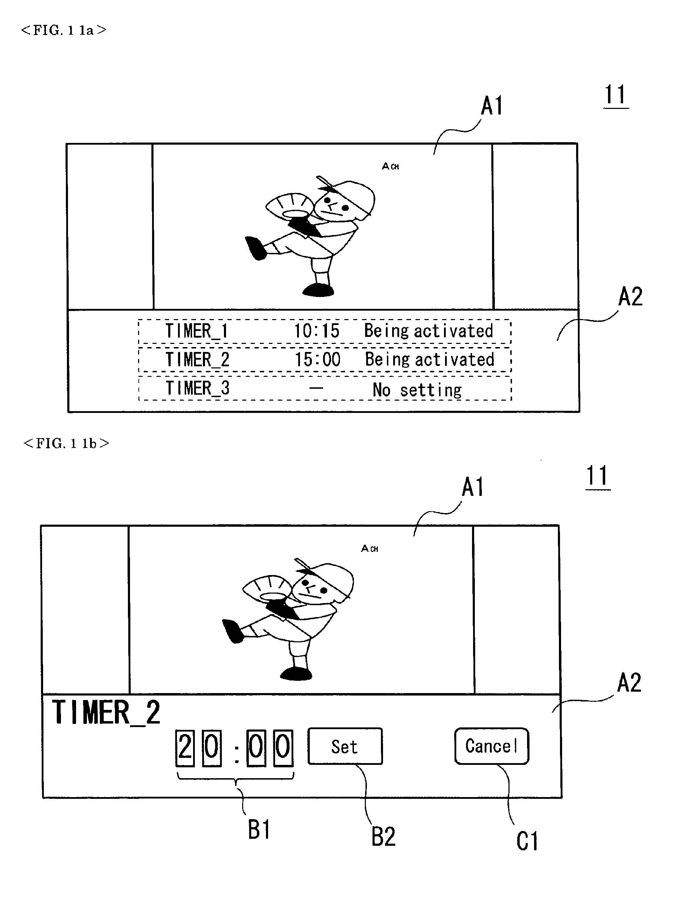

FIG. 11 shows an example of a screen displayed on the display section 34 when the timer operation is canceled or changed by the TV receiver 110. By operating the operation section 19 of the TV receiver 110 or not shown remote controller, a timer operation change/cancel screen as shown in FIG. 11 (a) is displayed. In the example of FIG. 11 (a), a broadcasting screen A1 and a timer operation screen A2 representing a timer operation state are displayed on the upper and lower sides, respectively, on one screen. At this time, three timer operation states are selectably displayed on the timer operation screen A2. For example, as can be seen from the timer operation screen A2, the remaining time of "TIMER 1" is 10 minutes and 15 seconds and that of "TIMER 2" is 15 minutes and 0 second.

When "TIMER 2" is selected for change of the setting time, the timer operation screen A2 shifts to the screen shown in FIG. 11 (b). When changing the timer operation, the user inputs a his or her desired timer time period (in this example, 20 minutes and 0 second) in a time input field B1 and depresses a change button B2. Then, the change content is stored and reflected in the timer information retention section 45 and, at the same time, the change content is transmitted from the transmission section 17 to remote controller 150. In order to cancel the timer operation, the user depresses a cancel button C1, and the cancel of the timer operation is recorded and reflected in the timer information retention section 45 and, at the same time, information indicating that the timer operation of "TIMER 2" is notified to the remote controller 150 (reception section 51) from the transmission section 17. Upon acquisition of the change or cancel instruction, the remote controller 150 reflects the received instruction in the timer information retention section 57 and then changes or cancels the timer operation according to the instruction.

As described above, the timer operation set by the remote controller 150 can be changed or canceled by the TV receiver 110 installed in apposition away from the remote controller 150. Thus, even when the user moves from the kitchen to living room, he or she can change or cancel the timer operation without returning to the kitchen. For example, assume that a first user sets the timer operation for a predetermined task. In this situation, in the case where a second user has done the task before count-up of the timer, the first user need not return to the kitchen.

The remote controller 150 may notify the TV receiver 110 of completion of the change or cancel of the timer operation and, in this case, the TV receiver 110 may display information indicating that the change or cancel has been reflected after receiving the information. Although the timer operation between the remote controller 150 and TV receiver 110 which is not a primary operation target of the remote controller 150 has been described in the present embodiment, the configuration according to the present embodiment may naturally be applied to the timer operation between the remote controller and a TV receiver which is set as a primary operation target of the remote controller.

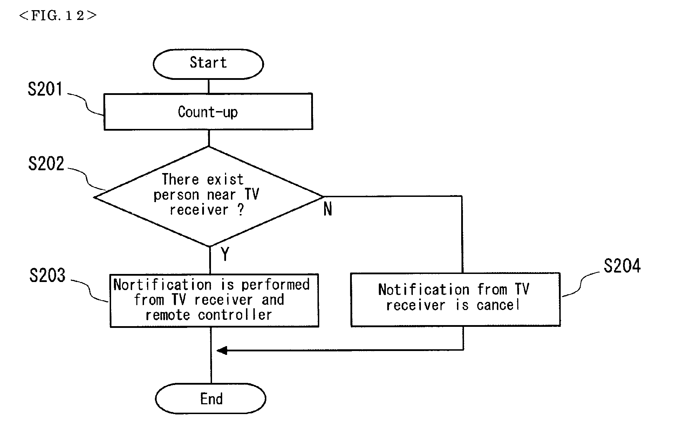

Subsequently, processing of changing a notification mode using a function of the human body detection sensor 46 of the TV receiver 110 in the case where the user is not located near the TV receiver 110 at the count-up time will be described with reference to a flowchart of FIG. 12.

At the count-up time of the timer operation (S201), the main control section 20 of the TV receiver 110 determines whether a person exists near the TV receiver 110 based on the detection result of the human body detection sensor (e.g., infrared ray sensor) 46 (S202). When it is determined that there exists a person near the TV receiver 110 (Y in S202), the main control section 20 of the TV receiver 110 performs the notification according to a condition previously set in the TV receiver 110 (S203). For example, display of the count-up is made on the display section 34, and an alarm sound is output from the speaker 36. At this time, the remote controller 150 may lower the volume of the alarm sound or skip the notification in response to the notification from the TV receiver 110.

When it is determined that there does not exist a person near the TV receiver 110 (N in S202), the main control section 20 notifies the remote controller 150 of the corresponding information through the transmission section 17 (S204). Then, the main controller 20 performs the notification of the TV receiver 110 by means of only the alarm sound from the speaker 36 (S205). That is, it is no use performing the notification by means of the display of the count-up in the case of absence of a person, so that only the alarm sound is output as the notification. In the case where only the alarm sound is output as the notification, the volume of the alarm sound may be raised as compared to the case where notification is made in combination of the display and alarm sound. This allows the user to reliably recognize the notification even when he or she is not located near the TV receiver 110.

Although the presence/absence of a person is determined based on the detection result of the human body detection sensor 46, it may be determined based on a user' s operation performed for the TV receiver 110. For example, the main control section 20 stores the user's last operation time in the memory 42. Then, in the case where the count-up time falls within a predetermined time period (e.g., 10 seconds) from the last operation time, the main control section 20 determines that the user exists near the TV receiver 10 and notifies the remote controller 150 of the corresponding information through the transmission section 17. The remote controller 150 that has received the notification performs control such that the count-up notification is not performed in the remote controller 150 itself. This prevents unnecessary notification processing, thereby saving the battery of the remote controller 150.

### <Third Embodiment>

In the present embodiment, the notification concerning the timer operation set by the remote controller 150 of the second embodiment is performed not by the TV receiver 110 but by a recorder 210 externally connected to the TV receiver 110. For example, there is assumed a case where the TV receiver 110 cannot operate in cooperation with the remote controller 150 and instead the recorder 210 operates in cooperation with the remote controller 150.

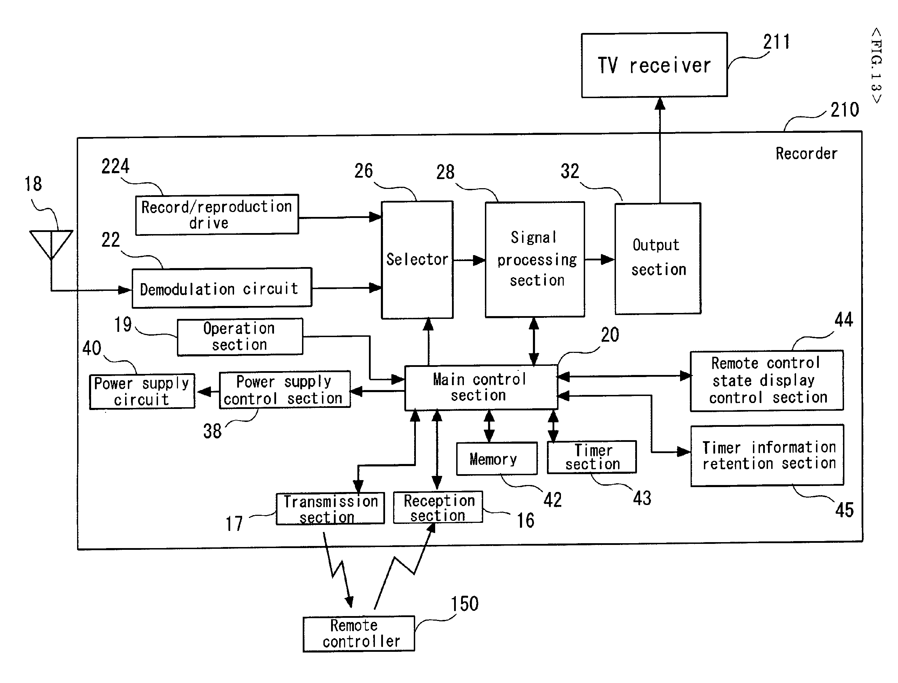

FIG. 13 is a functional block diagram showing a schematic configuration of the recorder 210 according to the present embodiment. The remote controller 150 of the present embodiment may have the same configuration as that of the second embodiment, and the description thereof will be omitted. Further, the recorder 210 has a similar configuration to the TV receiver 110, so that the same names and reference numerals are assigned to components that realize the same functions, and the descriptions thereof will be omitted. The recorder 210 has a main control section 20, a memory 42, and an operation section 19 that receives an input operation from the user. The recorder 210 further includes a demodulation circuit (tuner) 22 connected to an antenna 18, a recording/reproduction drive 224 such as an HDD (Hard Disk Drive) or DVD (Digital Versatile Disk) drive, a selector 26, a signal processing section 28, an output section 32 that outputs a signal to a TV receiver 211 according to a predetermined signal standard, and a timer section 43. The recorder 210 further includes a remote control state display control section 44 and a timer information retention section 45. The recorder 210 includes a power supply circuit 40 and a power supply control section 38.

In terms of the timer operation, the recorder 210 performs the same operation as the TV receiver 110 of the second embodiment. That is, the recorder 210 starts the operation of the timer section 43 upon receiving a start notification of the timer operation from the remote controller 150 and outputs the timer progress from the output section 32 to the TV receiver 211. As in the case of the second embodiment, the user can change or cancel a timer setting using the recorder 210, and bi-directional communication is performed between the recorder 210 and remote controller 150 according to the need so as to exchange information concerning the timer operation.

According to the present invention, even in the case where a device other than the TV receiver 110, e.g., a recorder that can communicate with the remote controller 150 by recognizing the remote control communication code of the remote controller 150 is used to mediate the timer operation information between the remote controller 150 and another TV receiver 211 in cooperation with the timer operation, it is possible to achieve notification of the progress of the timer to the user through the TV receiver 211.

### <Fourth Embodiment>

The present embodiment, which is realized by substantially the same configuration as the second embodiment, differs from the second embodiment in that the TV receiver 110 according to the present embodiment is installed in the kitchen and is a primary operation target of the remote controller 150. Further, in the present embodiment, the same functions as those in the first and second embodiments can be realized, and the remote controller 150 performs bi-directional communication with the TV receiver 110 through three communication channels using three transmission sections 52 (52a to 52c) and three reception sections 51 (51a to 51c). A characteristic function of the present invention narrows down the communication channels to one after confirming establishment of communication between the remote controller 150 and TV receiver 110. A pair of the first transmission section 51a and first reception section 52a, a pair of the second transmission section 51b and second reception section 52b, and a pair of the third transmission section 51c and third reception section 52c are provided at substantially the same positions, respectively. In the bi-directional communication, communication between three transmission sections including the first transmission section 51a, second transmission section 51b, and third transmission section 51c provided on the transmission side and a common single reception section on the TV receiver side can be performed. In other words, the first to third remote control signal communication sections are arranged on the outer peripheral of the top surface of the remote controller 150, maintaining the relative positional relationships with the liquid crystal display section 54, TV control key section 60, and clock/light-up key section 70, respectively. Hereinafter, operation in the present embodiment will be described concretely.

First, based on a user's operation, the remote controller 150 outputs signals to the TV receiver 110 from the first to third transmission sections 52a to 52c. At this time, it is possible to identify from which one of the first to third transmission sections 52a to 52 each of the signals has been output. More specifically, the output signals include IDs for identifying the transmission sections 52 or have different modulation frequencies. The TV receiver 110 can identify from which one of the transmission sections 52 (52a to 52c) a received signal has been output. In the case where the TV receiver 110 makes identification based on the IDs included in the signals, it is configured to recognize the IDs. In the case where the TV receiver 110 makes identification based on the frequencies, the reception section 16 of the TV receiver 110 is configured to be a reception sensor that can discriminate receivable modulation frequencies or that corresponds to frequencies of the signals transmitted from the remote controller 150. In this embodiment, a case where the identification is made based on the IDs will be described.

The TV receiver 110 determines which communication channel is available based on the recognized IDs, selects one available communication channel (ID), and transmits it to the remote controller 150 from the transmission section 17. In the case where a plurality of communication channels are available, one ID that has been set previously is selected and notified. Even in a state where the operation button of the remote controller 150 continues being depressed, when the remote controller 150 receives a reply signal from the TV receiver 110, it maintains only one of the transmission sections 52 (52a to 52c) corresponding to the communication channel (ID) specified in the reply signal in an outputtable state while disables the other two transmission sections 52 so that signals cannot be output from the two transmission sections 52.

By allowing the remote controller 150 and TV receiver 110 to execute such a function, it is possible to enable only one effective communication channel (transmission section) and disable other communication channels (transmission sections) even in the case where the remote controller 150 is attached to the door of a refrigerator or a storage rack installed in the kitchen by means of the magnets 55 without regard to the attachment direction or posture of the remote controller 150. As a result, output of unnecessary operation signal is suppressed, thereby saving the battery incorporated in the remote controller 150. In the case where the remote controller 150 has a motion sensor or the like that can detect the posture of the remote controller 150 itself, the above processing of narrowing down the communication channels to one may be performed while the position or posture of the remote controller 150 is maintained. Further, communication processing of checking whether a communicable state between the remote controller 150 and TV receiver 110 is maintained may be performed at a predetermined timing.
Although the communication channels are narrowed down to one after confirmation of communication establishment in the present embodiment, a configuration may be adopted in which the function of only a transmission section 51 corresponding to the communication channel that has not been established may be disabled. In this case, the TV receiver 110 notifies the remote controller 150 of all the IDs corresponding to communication channels that have been established.

Although the present invention has been described above with reference to preferred embodiments, the above embodiments are merely illustrative, and it will be apparent to those having ordinary skill in the art that various modifications may be made to combination of the components or processing processes and that such modifications are included in the scope of the present invention.

For example, although the timer function of the remote controller 50 is utilized as a kitchen timer, the usage form of the timer function is not limited to this. For example, the timer function may be utilized for notification of, e.g., the timing at which the bath water is ready or end time of a washing machine.

## Claims

1. A remote controller comprising:
a TV operation function section that operates a TV broadcast receiver;
a timer function section that can make a timer operate independently of the operation performed for the TV broadcast receiver; and
a notification section that makes notification of progress of the timer in the timer function section.

2. The remote controller according to claim 1, wherein the notification section comprises a display section that displays the timer's progress.

3. The remote controller according to claim 1, wherein the timer function section can execute a plurality of timers.

4. The remote controller according to claim 2, wherein the timer function section can execute a plurality of timers.

5. The remote controller according to any one of claims 1 to 4, wherein
the TV operation function section outputs a signal for operating the TV broadcast receiver when the timer function is activated and counts up a preset time period.

6. The remote controller according to claim 5, wherein
the TV operation function section can operate a TV broadcast receiver different from a TV broadcast receiver as a primary operation target of the remote controller in conjunction with the timer operation.

7. The remote controller according to any one of claims 1 to 4, wherein
at the time when the timer function starts, the TV operation function section notifies the TV broadcast receiver of a set timer time period and the start of the timer function.

8. The remote controller according to any one of claims 1 to 4, wherein
the TV operation function section outputs a signal for operating the TV broadcast receiver when the timer function is activated and counts up a preset time period and, at the time when the timer function starts, notifies of a set timer time period and the start of the timer function.

9. The remote controller according to claim 8, wherein
the TV operation function section can operate a TV broadcast receiver different from a TV broadcast receiver as a primary operation target of the remote controller in conjunction with the timer operation.

10. The remote controller according to claim 6, further comprising an external device operation function section that operates an external device different from any of the TV broadcast receivers in conjunction with the timer operation.

11. The remote controller according to claim 9, further comprising an external device operation function section that operates an external device different from any of the TV broadcast receivers in conjunction with the timer operation.

12. The remote controller according to any one of claims 1 to 4, wherein
the timer function section makes notification of the timer's progress at a predetermined timing.

13. The remote controller according to claim 5, wherein
the timer function section makes notification of the timer's progress at a predetermined timing.

14. The remote controller according to claim 6, wherein
the timer function section makes notification of the timer's progress at a predetermined timing.

15. The remote controller according to any one of claims 1 to 4, further comprising fixing means for fixing the remote controller to a predetermined location.

16. The remote controller according to claim 5, further comprising fixing means for fixing the remote controller to a predetermined location.

17. The remote controller according to claim 6, further comprising fixing means for fixing the remote controller to a predetermined location.

18. The remote controller according to claim 7, further comprising fixing means for fixing the remote controller to a predetermined location.

19. The remote controller according to claim 8, further comprising fixing means for fixing the remote controller to a predetermined location.

20. The remote controller according to claim 9, further comprising fixing means for fixing the remote controller to a predetermined location.

21. The remote controller according to claim 15, wherein
TV operation means for operating the TV operation function section and timer operation means for operating the timer function section are disposed apart from each other with the display section interposed therebetween.

22. The remote controller according to claim 16, wherein
TV operation means for operating the TV operation function section and timer operation means for operating the timer function section are disposed apart from each other with the display section interposed therebetween.

23. The remote controller according to claim 17, wherein
TV operation means for operating the TV operation function section and timer operation means for operating the timer function section are disposed apart from each other with the display section interposed therebetween.

24. The remote controller according to claim 18, wherein
TV operation means for operating the TV operation function section and timer operation means for operating the timer function section are disposed apart from each other with the display section interposed therebetween.

25. The remote controller according to claim 19, wherein
TV operation means for operating the TV operation function section and timer operation means for operating the timer function section are disposed apart from each other with the display section interposed therebetween.

26. The remote controller according to claim 20, wherein
TV operation means for operating the TV operation function section and timer operation means for operating the timer function section are disposed apart from each other with the display section interposed therebetween.

27. The remote controller according to any one of claims 1 to 4, further comprising:
a plurality of remote control signal communication sections which are provided at different positions; and
control means for acquiring, from the TV broadcast receiver, information concerning one of remote control signal communication sections communication between which and the TV broadcast receiver has established after transmitting remote control signals to the TV broadcast receiver from the plurality of remote control signal communication sections and disables the communication function of the remote control signal communication sections communication between which and the TV broadcast receiver has not been established.

28. The remote controller according to claim 27, further comprising a plurality of remote control signal communication sections which are arranged maintaining the relative positional relationships with the display section, TV operation means, and timer operation means, respectively.

29. The remote controller according to claim 28, further comprising control means for acquiring, from the TV broadcast receiver, information concerning one of remote control signal communication sections communication between which and the TV broadcast receiver has established after transmitting remote control signals to the TV broadcast receiver from the plurality of remote control signal communication sections and disabling the communication function of the remote control signal communication sections communication between which and the TV broadcast receiver has not been established.

30. A TV broadcast receiver that can be operated from a remote controller, further comprising:
a timer operation acquisition section that acquires, from the remote controller, information concerning the operation state of a timer that does not aim at reservation operation of the TV broadcast receiver and is allowed to progress independently by the remote controller; and
a timer operation section that performs operation associated with the acquired information concerning the operation state of the timer function.

31. The TV broadcast receiver according to claim 30, further comprising a power supply control section that turns on/off the power of the TV broadcast receiver when the timer operation acquisition section receives information indicating that the timer function has started.

32. The TV broadcast receiver according to claim 30 or claim 31, wherein
the timer operation section displays the progress of the timer on a display screen when the timer operation acquisition section receives notification of the start of the timer function and a time period set by the timer function.

33. The TV broadcast receiver according to claim 30 or claim 31, wherein
the timer operation section displays on a display screen information indicating that the preset time has been counted up at the count-up time of the preset time period.

34. The TV broadcast receiver according to claim 32, wherein the timer operation section displays the progress of the timer on a display screen when the timer operation acquisition section receives notification of the start of the timer function and a time period set by the timer function and displays on a display screen information indicating that the preset time has been counted up at the count-up time of the preset time period.

35. The TV broadcast receiver according to claim 30 or claim 31, further comprising a housing portion that houses the remote controller in such a manner so as to be able to receive an operation signal from the remote controller.

36. The TV broadcast receiver according to claim 32, further comprising a housing portion that houses the remote controller in such a manner so as to be able to receive an operation signal from the remote controller.

37. The TV broadcast receiver according to claim 33, further comprising a housing portion that houses the remote controller in such a manner so as to be able to receive an operation signal from the remote controller.

38. The TV broadcast receiver according to claim 34, further comprising a housing portion that houses the remote controller in such a manner so as to be able to receive an operation signal from the remote controller.

39. A remote controller further comprising:
a TV operation function section that operates a TV broadcast receiver;
a timer function section; and
a notification section that makes notification of the progress of a timer in the timer function section.

40. A TV broadcast receiver further comprising:
a timer operation acquisition section that acquires from a remote controller having a timer function information concerning the operation state of the timer function; and
a timer operation section that performs operation associated with the acquired information concerning the operation state of the timer function section.
